# EUROPEAN PATENT SPECIFICATION

(11) **EP 3 973 151 B1**
(45) Date of publication and mention of the grant of the patent: **03.07.2024**
(21) Application number: 20731558.1
(22) Date of filing: 18.05.2020
(51) Int. Cl.: F01N 3/20, F01N 13/18

(54) **LINE FOR A HEATED FLUID COMPRISING MORE CONDUITS, IN PARTICULAR FOR AN SCR SYSTEM OR AN INJECTION SYSTEM FOR WATER AND ASSEMBLY PROCESS**
LEITUNG FÜR EIN ERWÄRMTES FLUID MIT MEHREREN ROHRLEITUNGEN, INSBESONDERE FÜR EIN SCR-SYSTEM ODER EIN EINSPRITZSYSTEM FÜR WASSER UND MONTAGEVERFAHREN
CONDUITE POUR FLUIDE CHAUFFÉ DOTÉE DE PLUSIEURS CONDUITS, EN PARTICULIER POUR SYSTÈME SCR OU POUR SYSTÈME D'INJECTION D'EAU, ET PROCÉDÉ D'ASSEMBLAGE ASSOCIÉ

(30) Priority: 20.05.2019 IT 201900007010
(43) Date of publication of application: 30.03.2022
(73) Proprietor: HUTCHINSON S.r.l., 10090 Rivoli (TO) (IT)
(72) Inventor: ALBONICO, Angelo Mario Adamo, 28100 Novara (IT); NOTO, Giuseppe, 10141 Torino (IT); OLIVA, Gaetana Cristiana, 10024 Moncalieri (TO) (IT); BAGNASCO, Maurizio, 10024 Moncalieri (TO) (IT); BERTALMIO, Roberto, 10043 Orbassano (TO) (IT)
(74) Representative: Torredimare, Luca
(86) International application number: PCT/IB2020/054673
(87) International publication number: WO 2020/234738

(56) References cited:
- EP-A1- 3 431 855
- DE-A1-102016 220 594
- US-A1- 2018 252 345

## Description

### Technical field

The present invention relates to a line for a heatable fluid, in particular for an SCR system or a water injection system. However, as will be appreciated, the present invention is not only applicable to SCR systems, since the connector can be used in combination with a duct configured to carry any fluid to be heated.

### Background art

Selective catalytic reduction (SCR) is a means of converting nitrogen oxides, also referred to as NOₓ, with the aid of a catalyst, into diatomic nitrogen (N₂) and water (H₂O). A gaseous reductant, typically anhydrous ammonia, aqueous ammonia or urea, is added to a stream of flue or exhaust gas and is adsorbed onto a catalyst. Carbon dioxide, CO₂, is a reaction product when urea is used as the reductant.

Commercial selective catalytic reduction systems are typically found on large boilers for public facilities, industrial boilers, and furnaces for municipal solid waste, and have proven to reduce NOₓ by 70-95%. More recent applications include diesel engines, like those found on big ships, diesel locomotives, gas turbines and cars.

In the automotive field, in particular, an SCR system is configured to supply an aqueous urea solution to the catalyst inlet and is typically arranged downstream of the exhaust silencer: in the catalyst, the urea reacts with the nitrogen oxides contained in the exhaust gases, thereby eliminating such oxides from the atmospheric emissions.

The reaction that makes it possible to transform urea and nitrogen oxides into water and CO₂ is effected by spraying the urea solution onto a catalyst, and is strongly temperature-dependent. In order to comply with the increasingly stringent regulations concerning the emissions of diesel vehicles, it is necessary to position the catalyst in a region where the exhaust gases are still hot, typically on the diesel particulate filter or immediately downstream of the same. In this position, however, the catalyst temperature may exceed the optimal value, resulting in decreased efficiency in abating nitrogen oxides (NOx). For this reason, in the latest systems there is a double injection of water-urea solution, typically onto the catalyst and downstream of the silencer.

In order to complete this process, therefore, the urea solution is generally made available in a tank, from which the solution can be taken and injected into the catalysts, possibly after having been mixed with compressed air, according to times and methods defined by an electronic control unit, which takes into consideration various external parameters (temperature, humidity, etc.) and internal parameters (engine operation, revolutions per minute, etc.).

The urea solution can only be used in the liquid phase, and its freezing temperature is approximately -11°C. Therefore, if the means of transport are to remain below such temperature, the SCR system must be equipped with electrically heated ducts, with electric resistors internal to or wound externally around the ducts. In addition to ensuring a quick and reliable connection of the ducts, the duct connectors must also ensure the electric connection between their electric resistors and the power source in order to heat the internal fluid, and this leads to increased complexity because the electric connections and the heating wires need to be secured around the hydraulic connector, this task being typically accomplished by taping.

In internal combustion engines, water injection, also known as anti-detonant injection (ADI), may spray water into the air or into the incoming fuel-air mixture, or else directly into the cylinder in order to cool some parts of the induction system, where any "hot points" might result in premature ignition. When applied to gasoline automotive engines, water injection avoids the necessity for injecting an additional amount of fuel to reduce NOₓ emissions, because the lower combustion temperature reduces NOₓ emissions. This may considerably reduce fuel consumption. Moreover, the vaporization of water, resulting in increased volume during the combustion cycle, increases the power produced by the engine.

Many water injection systems use a mixture of water and alcohol (often close to 50/50), with traces of water-soluble oil. Water provides the primary cooling effect, due to its high density and good heat absorption properties. Alcohol is combustible, and also acts as an anti-freeze agent for the water.

It is known from patent application PCT/IB2018/056267 to make the connections between the heating electric wires by soldering, by gluing with a conductive glue, or by crimping. However, making such a type of connection is difficult and time-consuming.

EP 3431855 A1 relates to an SCR connection point having a connector body, at least two fluid lines and a connector body and the housing enclosing the end regions of the fluid lines facing the connector body. The connector body connects at least two fluid lines to each other and is with the connected fluid lines in the housing can be used, wherein at least one fluid line via a connection point of the connector body in an insertion direction into the connection point inserted and detachably connected to the connector body in the state not inserted in the housing. The detachably connected fluid line has a holding means on its outer circumference, by means of which the fluid line can be fixed in the connection point in cooperation with a connector in the housing in the insertion direction of the fluid line in front of the connection point of the connector body arranged, fixing element is secured in the housing against loosening against the direction of insertion when inserted. At least one abutment is arranged in the housing, which, when inserted in the housing, prevents the connector body from shifting at least in the direction of the insertion direction of the fluid line fixed in the housing.

US 2018/252345 A1 discloses a connection unit having a connector and at least one fluid line that is connected to the connector, wherein the connector has at least two connection ends and a connector section that connects the connection ends to one another. A fluid line end of a fluid line engages with at least one connection end of the connector. At least one compensation element is connected to the fluid line in the area of the fluid line end of the fluid line, the compensation element being supportable on at least one support stop via at least one spring element. Due to a pressure increase in the connector section, the compensation element is movable against the restoring force of the spring element in the direction of the support stop, with an increase in the internal volume of the connector section.

DE 10 2016 220594 A1 relates to a fluid line which can be electrically heated by means of heating wires, comprising a first fluid line section protected by a protective sheath, a manifold assembly and further fluid line sections, each likewise protected by a protective sheath, wherein the first fluid line section can be branched into the continuing fluid line sections by means of the manifold assembly, the manifold assembly comprises a manifold piece and holding elements, and the first fluid line section and the continuing fluid lines can be fluid-tightly connected to the manifold piece, and the ends of heating wires of the first fluid line section can be fixedly connected with the ends of the heating wires of the continuing fluid line sections, wherein the heating wires of the first and the continuing fluid line sections can be placed around the manifold piece and the connecting points of the heating wires can be positioned in the holding elements.

### Summary of the invention

It is one object of the present invention to provide a line for a heatable fluid capable of overcoming this and other drawbacks of the prior art while at the same time being simple and economical to manufacture.

One advantage lies in the fact that the electric connection between the heating means associated with said ducts can be made more quickly and easily by means of male/female electric connectors.

A further goal of the present invention, according to a preferred embodiment thereof, is to provide a line for a heatable fluid which can connect three or more fluid ducts while minimizing the electric connection errors between the heating means associated with said ducts and simplifying the connection operation.

According to the present invention, this and other objects are achieved through a line for a heatable fluid and an assembly process in accordance with the appended independent claim 1.

It is understood that the appended claims are an integral part of the technical teachings provided in the following detailed description of the present invention. In particular, the appended dependent claims define some preferred embodiments of the present invention that include some optional technical features.

### Brief description of the drawings

Further features and advantages of the present invention will become apparent from the following detailed description, which is supplied by way of non-limiting example with reference to the annexed drawings, wherein:
- Figure 1 is a perspective view of a fluid line according to a particular embodiment of the present invention, wherein the electric connectors are not connected;
- Figure 2 is a perspective view of a fluid line according to a particular embodiment of the present invention, wherein the connector body is visible;
- Figure 3 is a perspective view of a fluid line according to a particular embodiment of the present invention, wherein an external casing is visible;
- Figure 4 is a perspective view of a fluid line according to a further embodiment of the present invention, wherein a different external casing is visible;
- Figure 5 is a view of the fluid line of Fig. 4, wherein a part of the external casing has been removed to show the connections between electric connectors enclosed in respective shells.

### Detailed description of the invention

With reference to the annexed drawings, there is shown a line for a heatable fluid. In the illustrated examples, the line for a heatable fluid is a part of an SCR system. As an alternative, the line for a heatable fluid may also be a part of a water injection system. However, a person skilled in the art will appreciate that the present invention is applicable to many different technical fields, whenever it is necessary to heat any fluidic medium (and therefore not only urea, typically used in an SCR system, or per se known mixtures, generally used in a water injection system), which is intended to flow through ducts 10, 20, 30.

The line for a heatable fluid comprises:
- at least three ducts 10, 20, 30 for a heatable fluid, through which a fluid is intended to flow,
- a connector 2 adapted to be coupled to said ducts 10, 20, 30 in order to put them in fluidic communication, and defining a passage for the fluid.

The fluid line comprises electric heating means positioned around the passage and around ducts 10, 20, 30, so as to heat the fluid through the fluid line.

Each duct 10, 20, 30 comprises first heating means R and two electric connectors 13, 14, 23, 24, 33, 34 of the male or female type connected to the first heating means R.

In the particular embodiment illustrated herein, in the fluid line there are at least two different types of electric connectors 3, 4, 13, 14, 23, 24, 33, 34, wherein at least one male connector and one female connector, belonging to two different types of electric connectors, cannot be connected to each other. According to one possible embodiment, no male connector belonging to a first type of connectors can be inserted into a female connector belonging to a second type of connectors. According to a possible alternative embodiment, a male connector belonging to a first type of connectors can be inserted into a female connector belonging to a second type of connectors, but it is not possible to insert a male connector belonging to a second type of connectors into a female connector belonging to a first type of connectors, e.g. because the connectors of the first type are smaller than the connectors of the second type.

Conveniently, the electric heating means, and in particular the first electric heating means R, are resistors; for example, such resistors comprise, or are, electric wires. In the preferred example illustrated herein, the first heating means R comprise electric wires or cables 11, 12, 21, 22, 31, 32 connected to, and in particular terminating with, the respective electric connectors 13, 14, 23, 24, 33, 34. As per se known in the art, electric wires 11, 12, 21, 22, 31, 32 are adapted to be connected to an electric current source (not shown) in order to produce heat through the current flowing in such wires, for the purpose of heating ducts 10, 20, 30. In a per se known manner, duct 10, 20, 30 - whereon connector 2 is intended to be mounted - is surrounded, whether internally or externally, by one or more electric heating elements configured to heat up the fluid flowing through said duct. The duct 10, 20, 30 comprises an inner tube 17, 27, 37, in which the fluid to be heated is intended to flow. Duct 10, 20, 30, in particular inner tube 17, 27, 37, is preferably surrounded by a sheath 15, 25, 35 of electrically and thermally insulating material, e.g. an elastomer (such as thermoplastic rubber), to ensure a higher degree of safety and thermal insulation. Inner tubes 17, 27, 37 are inserted into connector 2, in particular into body 8 of connector 2, to effect the fluidic connection for the fluid to be heated.

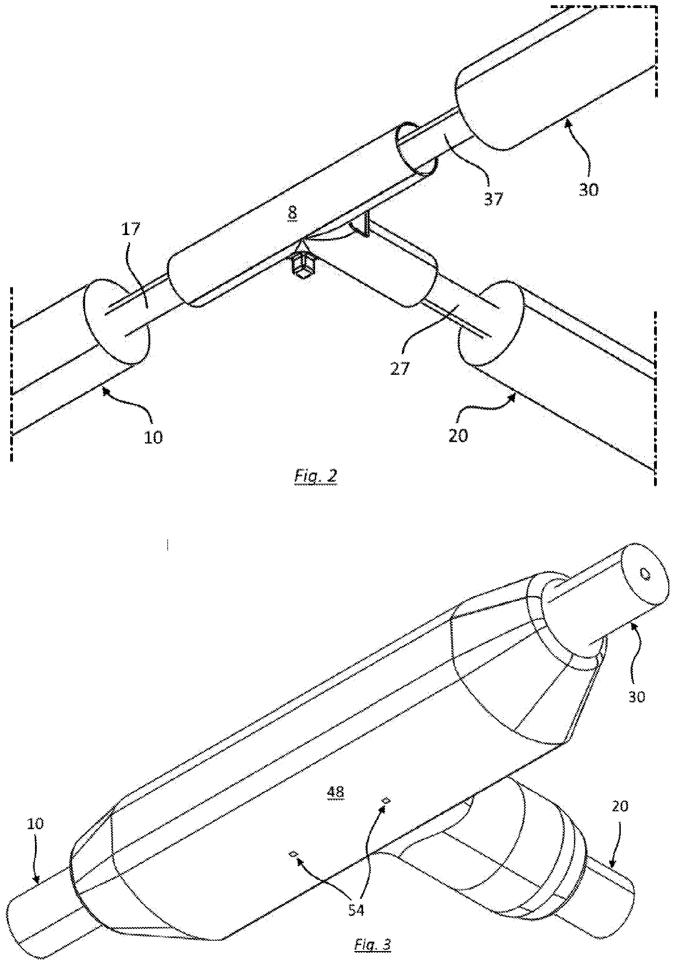

Preferred connector 2 illustrated herein (Fig. 2) comprises a body 8 that defines a passage for the fluid. Connector 2, in particular body 8, is configured to fluidically connect at least three ducts 10, 20, 30, which may be, for example, four, five or more as required. In the example, connector 2 is of the three-way type, since it connects the three ducts 10, 20, 30. For example, connector 2, and in particular body 8, is T-shaped. For example, the fluid coming from a duct 20 is diverted into the other two ducts 10, 30. Connector 2 comprises body 8, which is preferably thermally conductive. Connector 2, in particular the body 8, has a plurality of openings, three in this example, which are adapted to be fluidically connected to respective ducts 10, 20, 30. The passage for the fluid that will flow through connector 2 is defined between such openings.

The present invention easily permits putting several ducts, in which the fluid is heated, in mutual fluidic communication while at the same time allowing for a quick and simple connection of the electric heating means of the line. In fact, thanks to the presence of different types of electric connectors 13, 14, 23, 24, 33, 34 of the male/female type, it is possible to eliminate the risk that an operator might make any mistakes while connecting the electric connectors 13, 14, 23, 24, 33, 34, by only allowing those electric connection combinations which can ensure the heating of all ducts 10, 20, 30 and of connector 2. As a matter of fact, a wrong connection of electric connectors 13, 14, 23, 24, 33, 34 may cause insufficient heating of the fluid because of a partial or absent flow of current. Assembly is facilitated by the shape of electric connectors 13, 14, 23, 24, 33, 34, which is different depending on where they have to be connected. Should a wrong connection be still possible, e.g. because there is a small male connector that can be plugged into a bigger female connector, the operator will become aware of the wrong connection because he will then have to connect a big male connector into a small female connector, which he will find impossible to do. At this point, the operator will readily realize the mistake and will be able to remedy by simply disconnecting two connections, without having to start the installation operations anew.

Preferably, an auxiliary heating means is mounted to connector 2, terminating with respective auxiliary electric connectors 3, 4 configured to be connected to electric connectors 13, 14, 23, 24, 33, 34 of ducts 10, 20, 30. The auxiliary heating means comprises an auxiliary electric wire 6, which in particular has a first end connected to a first auxiliary electric connector 3 and a second end connected to a second auxiliary electric connector 4. Optionally, there may be more than one auxiliary electric wire 6. The function of the auxiliary heating means is to increase the heating area in contact with connector 2. In other words, it essentially acts as an "extension" of the heating means associated with ducts 10, 20, 30. Thus, even though the heating means associated with ducts 10, 20, 30 (in particular, wires 11, 12, 21, 22, 31, 32) do not protrude much from the respective duct, the connector can be enveloped in a large heating surface. The auxiliary heating means is positioned around the fluid passage in connector 2. Therefore, the electric heating means include the first electric heating means R and the auxiliary heating means. Assembling the fluid line is thus simple and quick, because the user can mount the auxiliary heating means to connector 2 even when ducts 10, 20, 30 have not yet been fitted into connector 2, so that more room is available to the user.

Auxiliary electric connectors 3, 4 are also of the male/female type. Electric connectors 3, 4, 13, 14, 23, 24, 33, 34 may be of the plug/socket type.

The expression "two different types of electric connectors" 3, 4, 13, 14, 23, 24, 33, 34 means that such connectors are configured in such a way that a male connector of a first type cannot be connected to a female connector of a second type in order to establish an electric connection. In particular, said at least two different types of electric connectors have different shapes and/or dimensions which prevent proper male/female engagement, particularly in at least one of the two engagement directions. On the other hand, the male connectors and female connectors belonging to the same connector type can be connected together to establish an electric connection. According to some possible variations, there may be more than two different types of electric connectors. Advantageously, electric connectors 3, 4, 13, 14, 23, 24, 33, 34 are adapted to create a mechanically removable connection, e.g. by means of a snap-type or clip mechanism or a snap locking device.

With reference to the example shown herein, electric connectors 23, 24 of duct 20 are of a first type; in particular, they 23, 24 are male connectors. Electric connectors 13, 14 of duct 10 are of two different types; in particular, connectors 13, 14 are both female connectors. In the example, connector 13 is a connector of the second type, and connector 14 is of the first type. Electric connectors 33, 34 of duct 30 are of two different types; in particular, connectors 33, 34 are both female connectors. In the example, connector 33 is a connector of the first type, and connector 34 is of the second type.

With reference to the preferred embodiment, auxiliary electric connectors 3, 4 are connectors of the second type. In the example, auxiliary electric connectors 3, 4 are both male connectors.

Advantageously, electric connectors 13, 14, 23, 24, 33, 34 of each duct 10, 20, 30 cannot be connected together. That is to say that the two electric connectors (e.g. 13, 14) of one duct (e.g. 10) cannot be connected to each other. In fact, the two electric connectors 13, 14 of duct 10 are of different types and are both female connectors; the two electric connectors 23, 24 of the duct 20 are both male connectors (although they belong to the same type; in particular, they 23, 24 are equal); the two electric connectors 33, 34 of duct 30 are of different types and are both female connectors. It is thus possible to avoid that two electric connectors of the same duct might inadvertently be connected together. With reference to the preferred embodiment, also the auxiliary electric connectors 3, 4 cannot be connected together; in the example, in fact, they 3, 4 are both male connectors.

With reference to the illustrated example, in order to assemble the fluid line the user couples together the following connectors: 3+34, 4+13, 14+23, 24+33. In the example, therefore, there are four electric connections between electric connectors.

Advantageously, the electric connection of electric connectors 3, 4, 13, 14, 23, 24, 33, 34 is enclosed in an electrically insulating shell 39 (e.g. sleeve-shaped), which is preferably of the heat-shrinking type.

In accordance with one possible variation of the invention, the auxiliary heating means (auxiliary electric wire 6 in the example) is absent. Therefore, there are only the connections between electric connectors 13, 14, 23, 24, 33, 34 of ducts 10, 20, 30. In this case, it is possible, for example, to increase the length of the free portion of electric wires 11, 12, 21, 22, 31, 32 in order to wind said free portion of at least some of said electric wires 11, 12, 21, 22, 31, 32 around connector 2, for the purpose of heating the fluid.

Preferably, connector 2 comprises a supporting structure 40 positioned around body 8 to support a part of the electric heating means around the passage for the fluid. Supporting structure 40 is removably mounted to the body of connector 2. Therefore, supporting structure 40 and the body are two distinct elements of connector 2. Preferably, supporting structure 40 defines a cavity in which body 8 is housed, and the electric heating means, particularly the auxiliary heating means, face, at least partly, towards said cavity. It is thus possible to enhance the heating effect, adding to the advantage of keeping the heating means neatly arranged, particularly when they are provided in the form of wires. In particular, supporting structure 40 is configured to hold the auxiliary heating means (in the example, auxiliary heating wire 6). Therefore, a part of the electric heating means, i.e. the auxiliary heating means in the example, is mounted to supporting structure 40, preferably in a removable manner. Advantageously, most of auxiliary electric wire 6 is located in the cavity of supporting structure 40 and faces towards body 8. Auxiliary electric wire 6 is interposed between supporting structure 40 and body 8.

Supporting structure 40 comprises fixing means for the electric heating means, e.g. recesses, protrusions, holes, to which part of the electric heating means can be fastened. In particular, a plurality of recesses are formed in the cavity of supporting structure 40, into which auxiliary electric wire 6 is retained.

Supporting structure 40 comprises, in particular, an inner surface defining the cavity, the shape of such inner surface being complementary to body 8. On the inner surface fixing means are formed, such as, for example, the recesses that house auxiliary electric wire 6.

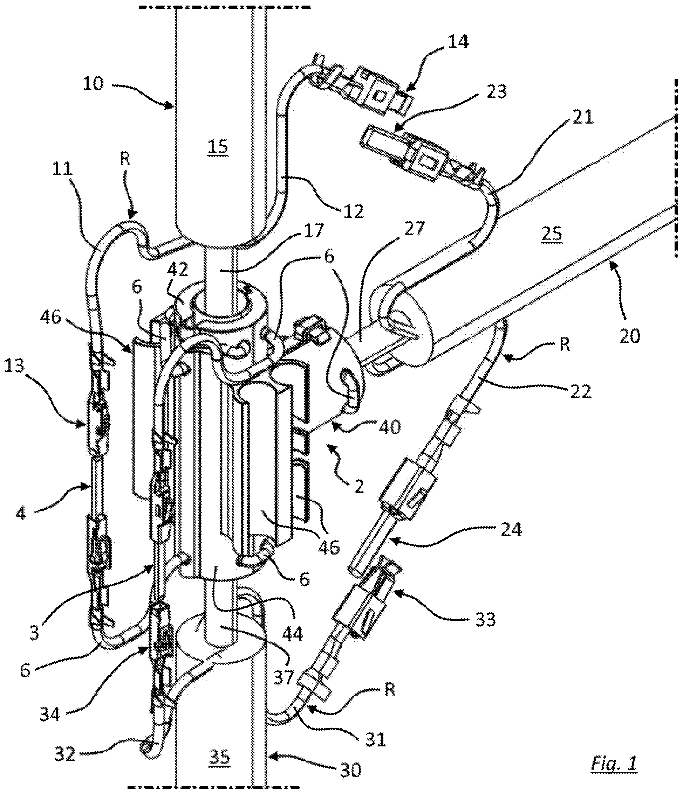

Preferably, supporting structure 40 comprises two mutually mounted half-bodies 42, 44 allowing supporting structure 40 to be removably assembled on body 8. Advantageously, half-bodies 42, 44 are mutually mounted in a movable manner (e.g. by means of a hinge, or a weakened region allowing their mutual rotation). Half-bodies 42, 44 are adapted to assume a closed configuration (Fig. 1), in which they are mounted to each other and hold body 8, and an open configuration, in which they permit the removal of body 8. In the example, half-bodies 42, 44 switch between such two configurations by rotating relative to each other. Advantageously, half-bodies 42, 44 are kept in the closed configuration by a closing mechanism, preferably a snap-type mechanism.

Preferably, supporting structure 40 comprises a plurality of snap-engaging receptacles 46 (in the example, situated peripherally with respect to supporting structure 40), configured to adapt to an electric connection between two complementary electric connectors 3, 4, 13, 14, 23, 24, 33, 34. Receptacles 46 hold such electric connections in position. In particular, receptacles 46 are arranged on an outer part of supporting structure 40. In the example, supporting structure 40 is made as one piece with receptacles 46. Preferably, receptacles 46 are adapted to retain shell 39, which is advantageously shaped as a sleeve, of the electric connections. According to one possible variant embodiment, supporting structure 40 comprises, preferably on an outer part thereof, fixing means for retaining the connections between complementary electric connectors 3, 4, 13, 14, 23, 24, 33, 34.

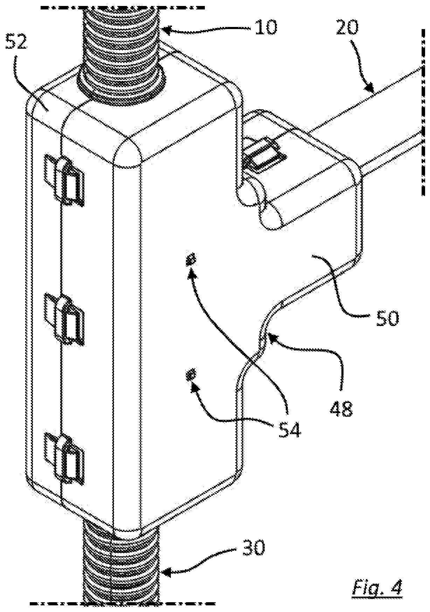

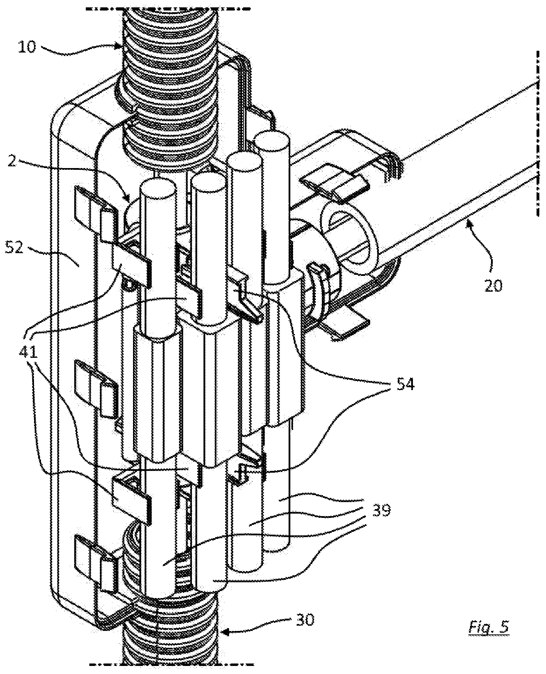

According to the variant shown in Figs. 4 and 5, supporting structure 40 comprises one or more clip portions 41 situated on an outer part thereof and configured to retain shells 39. In general, supporting structure 40 comprises retaining means for retaining shells 39.

As aforesaid, shell 39 is conveniently electrically insulating, preferably of the heat-shrinking type. According to one variant of the invention, the fixing of the electric connection between two complementary electric connectors 3, 4, 13, 14, 23, 24, 33, 34 on supporting structure 40 can be accomplished in several ways, e.g. by securing the electric connection, and in particular the respective shell 39, with adhesive tape.

In the particular example shown in Fig. 2, body 8 has no fixing means for fixing the heating means, in particular the auxiliary heating means consisting, in the example, of the auxiliary heating wire 6. Body 8 is simple to manufacture. In the example, the outer surface of body 8 is substantially smooth.

Optionally, connector 2 is protected by an external casing 48, which may be either an overmoulded portion (fig. 3), which is moulded over connector 2, or a rigid enclosure (Fig. 4). External casing 48 covers the connections between the electric connectors 3, 4, 13, 14, 23, 24, 33, 34, and in particular it also covers the body 8 and the supporting structure 40. The external casing 48 shown in Fig. 4 comprises two half-shells 50, 52 mutually mounted in a removable manner.

The process for assembling the line for a heatable fluid comprises the steps of:
- coupling connector 2, in particular the body, to ducts 10, 20, 30 in order to put them in fluidic communication,
- connecting electric connectors 13, 14, 23, 24, 33, 34 of ducts 10, 20, 30 to complementary electric connectors 3, 4, 13, 14, 23, 24, 33, 34, so as to allow current to flow between the electric heating means.

Preferably, the step of connecting electric connectors 13, 14, 23, 24, 33, 34 is followed by a step of enclosing the electric connection of electric connectors 3, 4, 13, 14, 23, 24, 33, 34 in said electrically insulating shell 39, which is preferably of the heat-shrinking type. In particular, the operator inserts a first electric connector (e.g. 13) into electrically insulating shell 39 (shaped as a sleeve in the example), letting the first electric connector protrude at least partially from said shell 39, then connects the first electric connector to a second electric connector (e.g. 4), and finally inserts the connection between such electric connectors into shell 39. In the example, prior to connecting the two electric connectors, the first connector (e.g. 13) and wire 11 associated therewith are run through shell 39. After this step, the two joined electric connectors are within electrically insulating shell 39.

Subsequently, it is possible to envisage a step of applying heat to heat-shrinking shells 39 in order to cause them to shrink. Preferably, heat-shrinking shells 39 internally contain (in particular, on an inner surface facing towards the electric connectors) an adhesive or a layer of material to prevent fluids from entering the electric connection region. Therefore, the adhesive has such chemical and/or physical characteristics as to prevent the fluid from entering said connection once the shell has been heated. Due to heating, in fact, the adhesive softens and melts, thus ensuring a proper sealing of the electric connection.

With reference to the preferred embodiment, steps are envisaged for mounting a part of the heating means to supporting structure 40, and then mounting such supporting structure 40 to body 8 of connector 2. In particular, the auxiliary heating means (in the example, auxiliary electric wire 6) is mounted to supporting structure 40, which is then mounted to body 8.

The step of mounting a part of the heating means to supporting structure 40 may be carried out either before or after the step of coupling connector 2 to ducts 10, 20, 30. In fact, the user may first mount the auxiliary heating means to connector 2, and then connect ducts 10, 20, 30 to said connector 2; afterwards he will connect electric connectors 3, 4, 13, 14, 23, 24, 33, 34 appropriately. Vice versa, the user may first connect ducts 10, 20, 30 to connector 2, and then mount the auxiliary heating means to said connector 2; afterwards he will connect electric connectors 3, 4, 13, 14, 23, 24, 33, 34.

With reference to the preferred embodiment illustrated herein, supporting structure 40 advantageously makes it possible to mount thereon 40 the auxiliary heating means (e.g. auxiliary wire 6) in a separate place (i.e. a place remote from body 8), when ducts 10, 20, 30 have already been fluidically connected to body 8 of connector 2.

Optionally, the above steps are followed by a step of enclosing connector 2 into external casing 48, e.g. by executing an overmoulding operation. In such a case, there is a step of inserting connector 2 into a mould in order to carry out the overmoulding operation. As an alternative, the connector is inserted into external casing 48, which is a rigid casing, as shown by way of example in Fig. 4.

Advantageously, connector 2, and in particular half-bodies 42, 44, comprise protrusions 54 (in Figs. 3 and 4 it is possible to see their tips protruding from external casing 48) which allow for repeatable positioning of connector 2 into the mould during the overmoulding process and reduce the movement thereof as the material is injected. Alternatively, such protrusions 54 may be used for positioning rigid external casing 48 correctly on connector 2 .

## Claims

1. Line for a heatable fluid, in particular for an SCR system or a water injection system; said line comprising:
- at least three ducts (10, 20, 30) for a heatable fluid, wherein a fluid is intended to flow through the ducts (10, 20, 30),
- a connector (2) adapted to be coupled to said ducts (10, 20, 30) in order to put them in fluidic communication, and comprising a body defining a passage for the fluid;
wherein
the fluid line comprises electric heating means positioned around the passage and around the ducts (10, 20, 30), so as to heat the fluid through the fluid line;
each duct (10, 20, 30) comprises first heating means (R) and two electric connectors (13, 14, 23, 24, 33, 34) of the male or female type connected to the first heating means (R) ;
**characterized in that** in the fluid line there are at least two different types of electric connectors (3, 4, 13, 14, 23, 24, 33, 34), wherein at least one male connector and one female connector, belonging to two different types of electric connectors, cannot be connected to each other.

2. Line according to claim 1, wherein an auxiliary heating means is mounted to the connector (2), terminating with respective auxiliary electric connectors (3, 4) configured to be connected to the electric connectors (13, 14, 23, 24, 33, 34) of the ducts (10, 20, 30).

3. Line according to claim 1 or 2, wherein the electric connection of the electric connectors (3, 4, 13, 14, 23, 24, 33, 34) is enclosed in an electrically insulating shell (39).

4. Line according to claim 3, wherein the electrically insulating shell (39) is of the heat-shrinking type.

5. Line according to any one of the preceding claims, wherein the first heating means (R) comprise electric wires or cables (11, 12, 21, 22, 31, 32) connected to the respective electric connectors (13, 14, 23, 24, 33, 34).

6. Line according to any one of the preceding claims, wherein the connector (2) comprises: a body (8) defining the passage for the fluid, and a supporting structure (40) positioned around the body (8), to which a part of the electric heating means is mounted.

7. Line according to claims 2 and 6, wherein the auxiliary heating means is mounted to the supporting structure (40).

8. Line according to claim 7, wherein the supporting
structure (40) comprises a plurality of snap-type receptacles (46) configured to adapt to an electric connection between two complementary electric connectors (3, 4, 13, 14, 23, 24, 33, 34), so as to hold such electric connections in position; the receptacles (46) being arranged on an external part of the supporting structure (40).

9. Line according to claim 7 or 8, wherein the supporting structure (40) defines a cavity in which the body (8) is housed, the auxiliary heating means facing, at least partly, said cavity.

10. Line according to claim 4, wherein the heat-shrinking shell (39) internally contains an adhesive adapted to prevent fluids from entering the electric connection of the electric connectors (3, 4, 13, 14, 23, 24, 33, 34).

11. Process for assembling a line for a heatable fluid according to any one of the preceding claims, comprising the steps of:
- coupling the connector (2) to the ducts (10, 20, 30) in order to put them in fluidic communication,
- connecting the electric connectors (13, 14, 23, 24, 33, 34) of the ducts (10, 20, 30) to complementary electric connectors (3, 4, 13, 14, 23, 24, 33, 34), so as to allow current to flow between the electric heating means.

12. Process according to claim 11, wherein, after the step
of connecting the electric connectors (13, 14, 23, 24, 33, 34), there is a step of enclosing the electric connection between two electric connectors (3, 4, 13, 14, 23, 24, 33, 34) into an electrically insulating shell (39).

13. Process according to claim 11, wherein the connector (2) comprises: a body (8) defining the passage for the fluid, and a supporting structure (40) positioned around the body (8), to which a part of the electric heating means is mounted and, prior to the step of connecting the electric connectors (13, 14, 23, 24, 33, 34), there are steps of mounting a part of the heating means to the supporting structure (40) and then mounting said supporting structure (40) to the body (8) .

14. Process according to claim 12, wherein the connector (2) comprises:
- a body (8) defining the passage for the fluid, and a supporting structure (40) positioned around the body (8), to which a part of the electric heating means is mounted,
- an auxiliary heating means, configured to be mounted to the supporting structure (40), terminating with respective auxiliary electric connectors (3, 4) configured to be connected to the electric connectors (13, 14, 23, 24, 33, 34) of the ducts (10, 20, 30);
the method comprising a step of mounting the auxiliary heating means to the supporting structure (40).

15. Process according to claim 12, wherein the step of enclosing the electric connection between two electric connectors (3, 4, 13, 14, 23, 24, 33, 34) into the shell (39) comprises the steps of:
- inserting a first electric connector (3, 4, 13, 14, 23, 24, 33, 34) into the shell (39), letting the first electric connector (3, 4, 13, 14, 23, 24, 33, 34) protrude at least partially from said shell (39),
- connecting the first electric connector (3, 4, 13, 14, 23, 24, 33, 34) to a second electric connector (3, 4, 13, 14, 23, 24, 33, 34),
- inserting the connection between said electric connectors (3, 4, 13, 14, 23, 24, 33, 34) into the shell (39) .

## Patentansprüche

1. Leitung für ein erwärmbares Fluid, insbesondere für ein SCR-System oder ein Wassereinspritzsystem, wobei die Leitung umfasst:
zumindest drei Rohrleitungen (10, 20, 30) für ein erwärmbares Fluid, wobei ein Fluid dazu bestimmt ist, durch die Rohrleitungen (10, 20, 30) zu fließen,
ein Verbindungsstück (2), das mit den Rohreitungen (10, 20, 30) gekoppelt werden kann, um sie in Fluidverbindung zu bringen, und das einen Körper umfasst, der einen Durchgang für das Fluid definiert;
wobei
die Fluidleitung elektrische Heizmittel umfasst, die um den Durchgang und um die Rohrleitungen (10, 20, 30) herum angeordnet sind, um das Fluid durch die Fluidleitung hindurch zu erwärmen; jede Rohrleitung (10, 20, 30) erste Heizmittel (R) und zwei elektrische Verbinder (13, 14, 23, 24, 33, 34) vom Typ männlich oder weiblich umfasst, die mit den ersten Heizmitteln (R) verbunden sind;
**dadurch gekennzeichnet, dass** in der Fluidleitung mindestens zwei verschiedene Typen von elektrischen Verbindern (3, 4, l3, 14, 23, 24, 33, 34) vorhanden sind,
wobei mindestens ein männlicher Verbinder und ein weiblicher Verbinder, die zu zwei verschiedenen Typen von elektrischen Verbindern gehören, nicht miteinander verbunden werden können.

2. Leitung nach Anspruch 1, **dadurch gekennzeichnet, dass** an dem Verbindungsstück (2) eine Hilfsheizeinrichtung angebracht ist, die mit jeweiligen Hilfselektroanschlüssen (3, 4) abschließt, die so eingerichtet sind, dass sie mit den elektrischen Verbindern (13, 14, 23, 24, 33, 34) der Rohrleitungen (10, 20, 30) verbunden werden.

3. Leitung nach Anspruch oder 2, **dadurch gekennzeichnet, dass** der elektrische Anschluss der elektrischen Verbinder (3, 4, 13, 14, 23, 24, 33, 34) von einem elektrisch isolierenden Gehäuse (39) umschlossen ist.

4. Leitung nach Anspruch 3, **dadurch gekennzeichnet, dass** das elektrisch isolierende Gehäuse (39) vom wärmeschrumpfenden Typ ist.

5. Leitung nach einem der vorhergehenden Ansprüche, wobei die ersten Heizmittel (R) elektrische Drähte oder Kabel (11, 12, 21, 22, 31, 32) umfassen, die mit den jeweiligen elektrischen Verbindern (13, 14, 23, 24, 33, 34) verbunden sind.

6. Leitung nach einem der vorhergehenden Ansprüche, wobei das Verbindungsstück (2) umfasst: einen Körper (8), der den Durchgang für das Fluid definiert, und eine um den Körper (8) herum angeordnete Stützstruktur (40), an der ein Teil der elektrischen Heizmittel angebracht ist.

7. Leitung nach den Ansprüchen 2 und 6, wobei die Hilfsheizeinrichtung an der Stützstruktur (40) angebracht ist.

8. Leitung nach Anspruch 7, wobei die Stützstruktur (40) eine Vielzahl von schnappbaren Aufnahmen (46) umfasst, die so eingerichtet sind, dass sie sich an eine elektrische Verbindung zwischen zwei komplementären elektrischen Verbindern (3, 4, 13, 14, 23, 24, 33, 34) anpassen, um solche elektrischen Verbindungen in Position zu halten; wobei die Aufnahmen (46) an einem äußeren Teil der Stützstruktur (40) angeordnet sind.

9. Leitung nach Anspruch 7 oder 8, bei der die Stützstruktur (40) einen Hohlraum definiert, in dem der Körper (8) untergebracht ist, wobei die Hilfsheizeinrichtung zumindest teilweise dem Hohlraum zugewandt ist.

10. Leitung nach Anspruch 4, **dadurch gekennzeichnet, dass** das wärmeschrumpfende Gehäuse (39) im Inneren einen Klebstoff enthält, der das Eindringen von Flüssigkeiten in den elektrischen Anschluss der elektrischen Verbinder (3, 4, 13, 14, 23, 24, 33, 34) verhindert.

11. Verfahren zum Zusammenbau einer Leitung für ein erwärmbares Fluid nach einem der vorhergehenden Ansprüche, umfassend die die folgenden Schritte:
- Verbinden des Verbindungsstücks (2) mit den Rohrleitungen (10, 20 , 30), um sie in Fluidverbindung zu bringen,
- Verbinden der elektrischen Verbinder (13, 14, 23, 24, 33, 34) der Rohrleitungen (10, 20, 30) mit komplementären elektrischen Verbindern (3, 4, 13, 14, 23, 24, 33, 34), um den Stromfluss zwischen den elektrischen Heizmitteln zu ermöglichen.

12. Verfahren nach Anspruch 11:
wobei nach dem Schritt des Verbindens der elektrischen Verbinder (13, 14, 23, 24, 33, 34) ein Schritt des Umschließens der elektrischen Verbindung zwischen zwei elektrischen Verbindern (3, 4, 13, 14, 23, 24, 33, 34) in ein elektrisch isolierendes Gehäuse (39) erfolgt.

13. Verfahren nach Anspruch 11, wobei der Verbinder (2) umfasst: einen Körper (8), der den Durchgang für das Fluid definiert, und eine Stützstruktur (40), die um den Körper (8) herum positioniert ist und an der ein Teil der elektrischen Heizmittel angebracht ist, und wobei vor dem Schritt des Verbindens der elektrischen Verbinder (13, 14, 23, 24, 33, 34) Schritte des Anbringens eines Teils der Heizeinrichtung an der Stützstruktur (40) und dann des Anbringens der Stützstruktur (40) an dem Körper (8) erfolgen.

14. Verfahren nach Anspruch 12, wobei der Verbinder (2) umfasst:
- einen Körper (8), der den Durchgang für das Fluid definiert, und eine Stützstruktur (40), die um den Körper (8) herum angeordnet ist, an dem ein Teil des elektrischen Heizmittels angebracht ist,
- eine Hilfsheizeinrichtung, die so eingerichtet ist, dass sie an der Stützstruktur (40) montierbar ist, die mit entsprechenden Hilfselektroanschlüssen (3, 4) endet, die so eingerichtet sind, dass sie mit den elektrischen Verbindern (13, 14, 23, 24, 33, 34) der Rohrleitungen (10, 20, 30) verbunden werden können; das Verfahren umfasst weiter einen Schritt der Montage der Hilfsheizeinrichtung an die Stützstruktur (40).

15. Verfahren nach Anspruch 12, wobei der Schritt des Umschließens der elektrischen Verbindung zwischen zwei elektrischen Verbindern (3, 4, 13, 14, 23, 24, 33, 34) in das Gehäuse (39) die folgenden Schritte umfasst:
- Einsetzen eines ersten elektrischen Verbinders (3, 4, 13, 14, 23, 24, 33, 34) in das Gehäuse (39), wobei der erste elektrische Verbinder (3, 4, 13, 14, 23, 24, 33, 34) zumindest teilweise aus dem Gehäuse (39) herausragt,
- Verbinden des ersten elektrischen Verbinders (3, 4, 13, 14, 23, 24, 33, 34) mit einem zweiten elektrischen Verbinder (3, 4, 13, 14, 2 3, 2 4, 33, 34),
- Einsetzen der Verbindung zwischen den elektrischen Verbindern (3, 4, 13, 14, 23, 24, 33, 34) in das Gehäuse (39).

## Revendications

1. Conduite pour un fluide pouvant être chauffé, en particulier pour un système SCR ou un système d'injection d'eau ; ladite conduite comprenant :
- au moins trois conduits (10, 20, 30) pour un fluide pouvant être chauffé, dans laquelle un fluide est destiné à s'écouler à travers les conduits (10, 20, 30),
- un raccord (2) adapté pour être couplé auxdits conduits (10, 20, 30) afin de les mettre en communication fluidique, et comprenant un corps définissant un passage pour le fluide ;
dans laquelle
la conduite de fluide comprend des moyens de chauffage électrique positionnés autour du passage et autour des conduits (10, 20, 30), de manière à chauffer le fluide à travers la conduite de fluide ;
chaque conduit (10, 20, 30) comprend des premiers moyens de chauffage (R) et deux connecteurs électriques (13, 14, 23, 24, 33, 34) du type mâle ou femelle connectés aux premiers moyens de chauffage (R) ;
**caractérisée en ce que** dans la conduite de fluide se trouvent au moins deux types différents de connecteurs électriques (3, 4, 13, 14, 23, 24, 33, 34), dans laquelle au moins un connecteur mâle et un connecteur femelle, appartenant à deux types différents de connecteurs électriques, ne peuvent pas être connectés l'un à l'autre.

2. Conduite selon la revendication 1, dans laquelle des moyens de chauffage auxiliaires sont montés sur le raccord (2), se terminant par des connecteurs électriques auxiliaires respectifs (3, 4) configurés pour être connectés aux connecteurs électriques (13, 14, 23, 24, 33, 34) des conduits (10, 20, 30).

3. Conduite selon la revendication 1 ou 2, dans laquelle la connexion électrique des connecteurs électriques (3, 4, 13, 14, 23, 24, 33, 34) est enfermée dans une enveloppe électriquement isolante (39).

4. Conduite selon la revendication 3, dans laquelle l'enveloppe électriquement isolante (39) est du type thermorétractable.

5. Conduite selon l'une quelconque des revendications précédentes, dans laquelle les premiers moyens de chauffage (R) comprennent des fils ou câbles électriques (11, 12, 21, 22, 31, 32) connectés aux connecteurs électriques respectifs (13, 14, 23, 24, 33, 34).

6. Conduite selon l'une quelconque des revendications précédentes, dans laquelle le raccord (2) comprend : un corps (8) définissant le passage pour le fluide, et une structure de support (40) positionnée autour du corps (8), sur laquelle une partie des moyens de chauffage électrique est montée.

7. Conduite selon les revendications 2 et 6, dans laquelle les moyens de chauffage auxiliaires sont montés sur la structure de support (40).

8. Conduite selon la revendication 7, dans laquelle la structure de support (40) comprend une pluralité de réceptacles de type à encliquetage (46) configurés pour s'adapter à une connexion électrique entre deux connecteurs électriques complémentaires (3, 4, 13, 14, 23, 24, 33, 34), de manière à maintenir de telles connexions électriques en position ; les réceptacles (46) étant agencés sur une partie externe de la structure de support (40).

9. Conduite selon la revendication 7 ou 8, dans laquelle la structure de support (40) définit une cavité dans laquelle le corps (8) est logé, les moyens de chauffage auxiliaires faisant face, au moins en partie, à ladite cavité.

10. Conduite selon la revendication 4, dans laquelle l'enveloppe thermorétractable (39) contient intérieurement un adhésif adapté pour empêcher des fluides d'entrer dans la connexion électrique des connecteurs électriques (3, 4, 13, 14, 23, 24, 33, 34).

11. Procédé d'assemblage d'une conduite pour un fluide pouvant être chauffé selon l'une quelconque des revendications précédentes, comprenant les étapes consistant à :
- coupler le raccord (2) aux conduits (10, 20, 30) afin de les mettre en communication fluidique,
- connecter les connecteurs électriques (13, 14, 23, 24, 33, 34) des conduits (10, 20, 30) à des connecteurs électriques complémentaires (3, 4, 13, 14, 23, 24, 33, 34), de manière à permettre à du courant de circuler entre les moyens de chauffage électrique.

12. Procédé selon la revendication 11, dans lequel, après l'étape de connexion des connecteurs électriques (13, 14, 23, 24, 33, 34), intervient une étape consistant à enfermer la connexion électrique entre deux connecteurs électriques (3, 4, 13, 14, 23, 24, 33, 34) dans une enveloppe électriquement isolante (39).

13. Procédé selon la revendication 11, dans lequel le raccord (2) comprend : un corps (8) définissant le passage pour le fluide, et une structure de support (40) positionnée autour du corps (8), sur laquelle une partie des moyens de chauffage électrique est montée et, avant l'étape de connexion des connecteurs électriques (13, 14, 23, 24, 33, 34) interviennent des étapes de montage d'une partie des moyens de chauffage sur la structure de support (40), puis de montage de ladite structure de support (40) sur le corps (8).

14. Procédé selon la revendication 12, dans lequel le raccord (2) comprend :
- un corps (8) définissant le passage pour le fluide, et une structure de support (40) positionnée autour du corps (8), sur laquelle une partie des moyens de chauffage électrique est montée,
- des moyens de chauffage auxiliaires, configurés pour être montés sur la structure de support (40), se terminant par des connecteurs électriques auxiliaires respectifs (3, 4) configurés pour être connectés aux connecteurs électriques (13, 14, 23, 24, 33, 34) des conduits (10, 20, 30) ;
le procédé comprenant une étape de montage des moyens de chauffage auxiliaires sur la structure de support (40).

15. Procédé selon la revendication 12, dans lequel l'étape consistant à enfermer la connexion électrique entre deux connecteurs électriques (3, 4, 13, 14, 23, 24, 33, 34) dans l'enveloppe (39) comprend les étapes consistant à :
- insérer un premier connecteur électrique (3, 4, 13, 14, 23, 24, 33, 34) dans l'enveloppe (39), en laissant le premier connecteur électrique (3, 4, 13, 14, 23, 24, 33, 34) faire saillie au moins partiellement à partir de ladite enveloppe (39),
- connecter le premier connecteur électrique (3, 4, 13, 14, 23, 24, 33, 34) à un second connecteur électrique (3, 4, 13, 14, 23, 24, 33, 34),
- insérer la connexion entre lesdits connecteurs électriques (3, 4, 13, 14, 23, 24, 33, 34) dans l'enveloppe (39).
